# EUROPEAN PATENT SPECIFICATION

(11) **EP 2 667 201 B1**
(45) Date of publication and mention of the grant of the patent: **13.05.2020**
(21) Application number: 13168698.2
(22) Date of filing: 22.05.2013
(51) Int. Cl.: G01P 15/08, B60R 21/0132, B60R 21/017

(54) **High energy impact sensor**
Aufprallsensor für hohe Energien
Capteur de choc à haute énergie

(30) Priority: 24.05.2012 US 201213479989
(43) Date of publication of application: 27.11.2013
(73) Proprietor: Hamilton Sundstrand Corporation, Charlotte, NC 28217 (US)
(72) Inventor: Codispoti, Benjamin, Raleigh, North Carolina 27613 (US); Lyttle, Charles Russ, Sevierville, Tennessee 37876 (US)
(74) Representative: Dehns

(56) References cited:
- US-A- 4 845 464
- US-A- 5 779 264
- US-A- 6 115 659
- US-A1- 2006 152 842
- LOKE Y ET AL: "Fabrication and characterization of silicon micromachined threshold accelerometers", SENSORS AND ACTUATORS A: PHYSICAL, ELSEVIER BV, NL, vol. 29, no. 3, 1 December 1991 (1991-12-01), pages 235-240, XP026759220, ISSN: 0924-4247, DOI: 10.1016/0924-4247(91)80020-P [retrieved on 1991-12-01]

## Description

### BACKGROUND

The present invention relates generally to impact sensors, and more particularly to vehicular impact sensors capable of identifying and responding to high energy shocks.

Impact sensors are common in modern vehicles, and commonly consist of systems of one or more accelerometers with output voltages proportional to shock magnitude. Such accelerometer-based impact sensors are commonly paired with airbags, fire suppression or extinguishing systems, alarms, and other peripheral systems to improve vehicle and passenger safety. Vehicular impact sensors commonly act as triggers for these peripheral safety systems, triggering fire suppression actions, airbags, etc. in response to any impact of more than a threshold magnitude.

Civilian vehicles typically use impact sensors to detect collisions and trigger collision safety systems. Military vehicles may occasionally encounter severe shock events corresponding to much higher energy impacts, such as from rocket propelled grenade or other explosive fire, while routinely experiencing relatively low energy shock events, such as from vehicle collisions or recoil of integrated weaponry. Severe shock events may necessitate immediate fire suppression or inerting action to prevent explosions. Conversely, fire suppression measures may be both unnecessary and undesirable in response to lower energy shock events. Impact magnitude alone may not be sufficient to distinguish between severe shock events and low energy shock events. US 5,779,264 describes a crash detector arrangement that is adapted to activate a safety device. US 4,845,464 describes a programmable sensor apparatus for generating an alarm signal upon detection of an alarm event. The system is particularly suited for use in vehicle security systems US 6,115,659 describes a process for triggering a passive safety device for vehicle occupants inside a vehicle. US 2006/0152842 A1 describes an integrated free-fall detection device for a portable apparatus, in particular for the protection of a mass-storage device (HDD - Hard Disk Drive) in a portable electronic apparatus. Document "Fabrication and characterization of silicon micromachined threshold accelerometers" of Y. Loke, G. H. McKinnon and M. J. Brett describes a threshold accelerometer for sensing very high acceleration levels.

There exists a need for an impact threat sensor capable of intelligently differentiating between high energy shocks which may constitute a threat to a vehicle, and lower energy events which may be routine or non-severe.

### SUMMARY

The present invention is directed toward an impact energy sensor as defined in claim 1 and toward a method for detecting high energy shock events as defined in claim 7.

### BRIEF DESCRIPTION OF THE DRAWINGS

FIG. 1 is a schematic block diagram of an impact energy sensor according to the present invention.
FIG. 2 is a flowchart depicting an impact sensing method according to the present invention.

### DETAILED DESCRIPTION

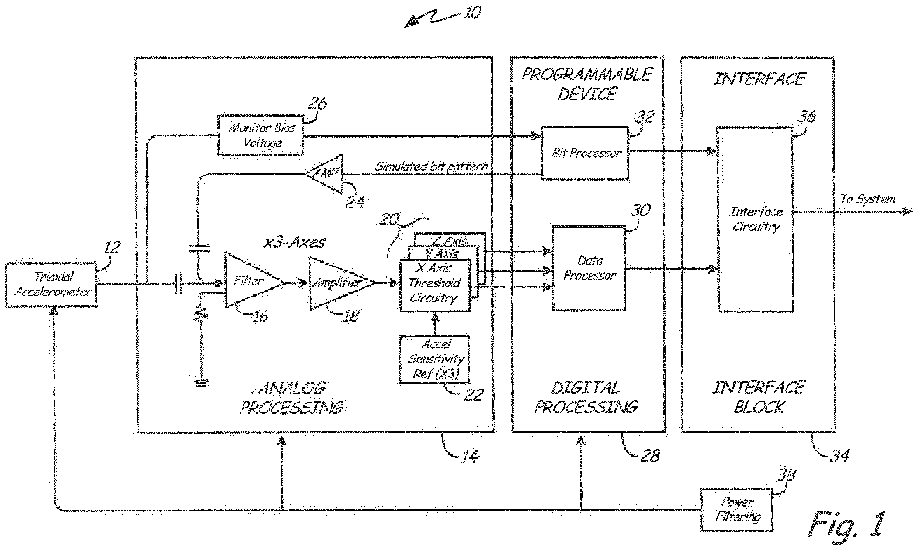

FIG. 1 is a schematic block diagram of impact energy sensor 10, comprising accelerometer 12, analog processing block 14 (comprising filter 16, amplifier 18, threshold circuitry 20, accelerometer sensitivity references 22, amplifier 24, and bias voltage monitor 26), digital processing block 28 (comprising data processor 30 and built-in test (BIT) processor 32), interface block 34 (comprising interface circuitry 36), and power filtering module 38. As depicted, accelerometer 12 is a triaxial accelerometer having three orthogonally aligned accelerometer axes, each of which produces a voltage signal proportional to the magnitude of an impact or shock event along one geometric axis (e.g. X, Y, Z). Each axis of accelerometer 12 is rated to sense extreme accelerations (e.g. > 6000g), and rated to withstand still higher accelerations (e.g. >10,000g). Although accelerometer 12 is described as a triaxial accelerometer, embodiments with single axis or dual axis accelerometers may analogously be used, depending on the needs of the particular application. Although the present description will focus on the embodiment of accelerometer 12 with output voltage proportional to impact or shock magnitude, some alternative embodiments of accelerometer 12 may produce a current signal, rather than a voltage signal, with corresponding changes to filter 16, amplifiers 18 and 24, and other signal processing electronics. Accelerometer 12 may produce a continuous voltage signal corresponding to acceleration magnitude, or may transmit periodic discrete signals. All powered components of impact energy sensor 10 receive power from power filtering module 38. Power filtering module 38 may provide power from a dedicated power supply, or from general vehicle power.

Analog processing block 14, digital processing block 28, and interface block 34 each represent logical divisions of impact energy sensor 10 according to functionality. Analog processing block 14, digital processing block 28, and interface block 34 may share some hardware elements, and are in one embodiment fabricated on a shared circuit board with accelerometer 12. Filter 16 is a triaxial analog filter connected to ground and to accelerometer 12. Filter 16 provides analog signal conditioning via, e.g., a band-pass filter which excludes frequencies corresponding to noise and background vibration. Although filter 16 is depicted as a single unit, outputs from each axis of accelerometer 12 may be conditioned separately, for instance to exclude different characteristic noise frequencies associated with each axis, depending on the particular application. In some embodiments, each axis of filter 16 may be connected to accelerometer 12 via a capacitor to remove voltage transients, as shown. Amplifier 18 is a triaxial amplifier capable of conditioning filtered analog signals from filter 16 with a specified gain for reception at threshold circuitry 20. Amplifier 18 may provide the same gain for each filtered axis of accelerometer 12, or may amplify each axis by an axis-specific gain value. In some instances, the gain or gains of amplifier 18 may be configured either during manufacture or during operation (e.g. by data processor 30) to normalize or otherwise adjust the output of each axis of accelerometer 12. This functionality may alternatively be provided via the selection of thresholds for threshold circuitry 20 (stored in accelerometer sensitivity references 22).

Threshold circuitry 20 includes three threshold comparators, each of which provide a binary output for one axis of accelerometer 12. In particular, threshold circuitry 20 outputs a binary threshold bit for each axis (X, Y, Z) of accelerometer 12. This threshold bit is zero where the amplitude of the amplified, filtered accelerometer signal of that axis falls short of a threshold determined by a corresponding accelerometer sensitivity reference 22, and positive where the amplified, filtered accelerometer signal of that axis exceeds the corresponding threshold. Accelerometer sensitivity references 22 are analog values that determine the threshold of corresponding axes of threshold circuitry 20, and which can be adjusted during maintenance or operation of impact energy sensor 10. Each axis of threshold circuitry 20 produces a non-zero output only if a corresponding accelerometer signal exceeds the appropriate threshold value specified by accelerometer sensitivity reference 22. Sensitivity references 22 are selected to exclude low signal amplitudes corresponding to noise or low-energy shock events from collisions, weapon recoil, and the like. In some embodiments, threshold accelerometer sensitivity references 22 may be selected to effectively normalize axes of accelerometer 12, rather than relying on amplifier 18 to provide this functionality. Although threshold circuitry 20 is depicted as outputting three distinct binary threshold bits (one corresponding to each axis of accelerometer 12), some embodiments of threshold circuitry 20 may provide only a single aggregate threshold bit produced by comparing an aggregated accelerometer signal (e.g. the square root of the sum of the squares of accelerometer signals for each axis, or the sum of absolute values of signals for each axis) to a single threshold value.

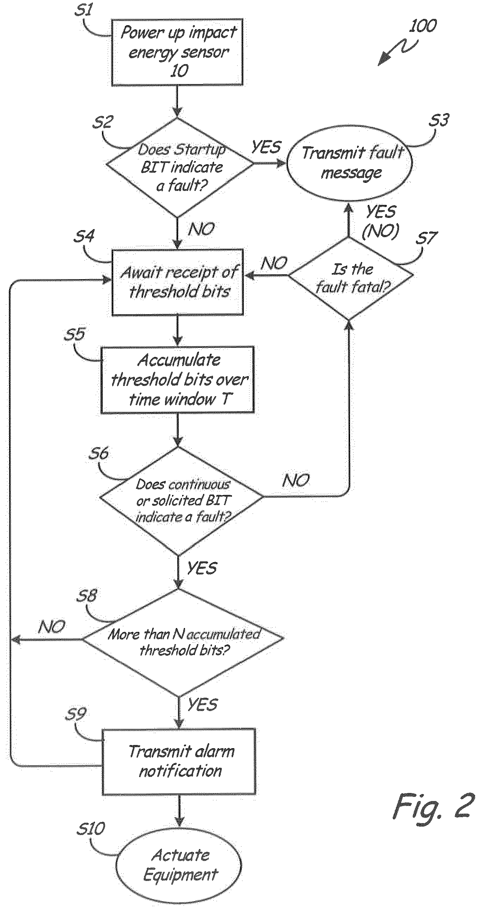

Data processor 30 is a logic-capable device such as a microprocessor or a complex programmable logic device (CPLD), the logic of which is described in greater detail with respect to FIG. 2. By accumulating amplitude-based threshold bits over time, data processor 30 is able to assess the total energy of shock events. Data processor 30 counts non-zero threshold bits from threshold circuitry 20 over a preset time window T, and throws an alarm notification only if accumulated threshold bits exceed a preset number N indicating a sufficiently high energy shock event. Data processor 30 may also include digital filters to weed out transient noise. Both the accumulation number N and the preset time window T are adjustable parameters which may vary depending on the particular application, and which may be modified during maintenance or operation of impact energy sensor 10. In particular, N, T, and accelerometer sensitivity references 22 may be selected for a particular vehicle application to throw alarm messages in response to shock events of a desired energy level. N, T, and accelerometer sensitivity references 22 may be further selected to reduce the likelihood of activation of emergency systems (e.g. fire suppression or explosion inerting) in non-emergency circumstances. Alarm notifications from data processor 30 are transmitted via interface circuitry 36 to appropriate vehicle systems such as diagnostic recorders, internal fire suppression and explosion inerting systems, and operator alert interfaces. Interface circuitry 36 may comprise a connection to a conventional controller area network (CAN) bus, a direct ("home run") connection to relevant systems, or a daisy chain connection with other sensor or diagnostic hardware. Although interface circuitry 36 is depicted as a single schematic block, interface block 34 may include multiple distinct interface circuitry connections to different systems.

BIT processor 32 is a logic capable device configured to test high impact energy sensor 10 for faults. BIT processor 32 may be a separate component in communication with data processor 30. In alternative embodiments, BIT processor 32 and data processor 30 may be logically separable functions performed by shared processor hardware. BIT processor 32 checks for live voltages from bias voltage monitor 26 indicating that accelerometer 12 is powered. Bias voltage monitor 26 comprises one or voltage connections to bias terminals of accelerometer 12, all of which are live when accelerometer 12 is powered and functioning properly. In some embodiments, BIT processor 32 may also monitor power supply voltages at other board locations to ensure that components are powered at system startup, and/or remain powered throughout operation. BIT processor 32 may test filter 16, amplifier 18, threshold circuitry 20, and digital processor 30 by transmitting a simulated BIT pattern corresponding to a test alert pattern. Amplifier 24 amplifies this simulated BIT pattern with a preset gain sufficient to substantially match outputs of accelerometer 12. This amplified output is received and processed by filter 16, amplifier 18, threshold circuitry 20, and data processor 30. In particular this amplified output is processed identically to signals from accelerometer 12, thereby enabling BIT processor 32 to verify that digital processor 30 throws alarm notifications when provided with appropriate (simulated) accelerometer outputs. During BIT simulation, BIT processor 32 communicates with data processor 30 to suppress alarm notifications to interface circuitry 36. BIT processor 32 may initiate built in tests, either running checking bias voltages or by running simulated values through filter 16, amplifier 18, and threshold circuitry 20, and data processor 30, in response to a variety of conditions. BIT processor 32 may, for instance, initiate built in tests upon startup of impact energy sensor 10 (startup BIT), in response to diagnostic requests from data processor 30 or a downstream controller connected via interface circuitry 36 (solicited BIT), or as a continuous monitoring scheme (continuous BIT) capable of flagging system faults as they develop. In some embodiments, BIT processor 32 continuously receives voltages from bias voltage monitor 26, and suppresses alarm notification outputs from data processor 30 when bias voltages indicate a voltage fault. BIT processor 32 thus enables accelerometer 12 to be swapped out (e.g. for maintenance) during operation of impact energy sensor 10 without risk of triggering alarm notifications. BIT processor 32 may similarly monitor bias voltages of other components for the same purpose. In this way, accelerometer 12 may be hot-swappable. BIT processor 32 may communicate fault status to diagnostic recorders, internal fire suppression and explosion inerting systems, and operator alert interfaces via interface circuitry 36.

FIG. 2 depicts method 100, a computerized method by which data processor 30 and BIT processor 32 identify high energy shock events from accumulated threshold bits. Method 100 begins with impact energy sensor 10 powering up. Each powered component of impact energy sensor 10, including data processor 30, receives power from power filtering block 38. (Step S1). At startup, BIT processor 32 runs a startup test verifying that accelerometer bias voltages are live, and/or that a simulated BIT pattern triggers the expected alarm notifications. (Step S2). If this startup BIT indicates a fault in impact energy sensor 10, BIT processor 32 and/or data processor 30 transmits a corresponding fault message to attached systems via interface circuitry 36. (Step S3). Otherwise, data processor 30 awaits receipt of non-zero threshold bits from threshold circuitry 20. (Step S4). Data processor 30 accumulates threshold bits over a time window of width T, which can be set during maintenance or in real time during operation. (Step S5). Upon receiving a threshold bit, some embodiments of impact energy sensor 10 may query BIT processor 32 to check for faults. Other embodiments may only check for faults when a BIT is solicited by a controller. (Step S6). If a solicited or continuous BIT indicates a fault, BIT processor 32 determines whether the fault is fatal. (Step S7). Transient faults, for instance, may not necessitate terminating method 100, while lingering or severe faults may necessitate immediately terminating method 100. If the fault is fatal, BIT processor 32 transmits a fault message as described above. (Step S3). If the fault is nonfatal, BIT processor 32 may or may not transmit a fault message, but continues to await receipt of threshold bits from threshold circuitry 20. (Step S4). Upon receipt of each non-zero threshold bit, data processor 30 determines whether more than N threshold bits have been accumulated within the time window of width T. (Step S8). If so, data processor 32 transmits an alarm notification (Step S9), and returns to awaiting further threshold bits (Step S4). If not, data processor returns directly to awaiting further threshold bits. (Step S4). In some applications, alarm notifications may trigger immediate actuation of emergency equipment such as fire suppression or explosion inerting equipment. (Step S10). Impact energy sensor 10 is particularly suited to actuate emergency fire suppression or explosion inerting systems by virtue of its capacity to distinguish between low and high energy shock events.

Impact energy sensor 10 throws alarm messages in response to high energy shock events, while suppressing alarms from low energy shock events or transient accelerometer signal amplitude noise. In this way, impact sensor 10 is able to distinguish between severe shocks which necessitate emergency action, and less severe shocks for which emergency action such as fire suppression or explosion inerting would be unnecessary or undesirable.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An impact energy sensor (10) comprising:
an accelerometer (12) for sensing accelerations greater than 6000g and for withstanding accelerations greater than 10,000 g;
an analog signal filter (16) configured to filter signals from the accelerometer (12);
threshold circuitry (20) configured to output a non-zero threshold bit only in response to filtered signals from the accelerometer (12) only which exceed a specified sensitivity threshold; and
a data processor (30) configured to accumulate the non-zero threshold bits from the threshold circuitry over a preset time window of width T to assess impact energy, and configured to transmit an alarm message only if the accumulated non-zero threshold bits exceed a preset number N within said time window T, indicating a sufficiently high energy shock event; further comprising a built-in test processor (32) configured to detect faults in the accelerometer,
wherein the built-in test processor is configured to provide simulated built-in test patterns to the analog signal filter to verify that the data processor transmits alarm messages in response to appropriate shock events.

2. The impact sensor of claim 1, wherein the built-in test processor (32) is configured to monitor bias voltages on the accelerometer.

3. The impact sensor of any preceding claim, wherein the impact sensor comprises interface circuitry (36) and wherein the data processor (30) is configured to report alarm messages via the interface circuitry (36) including a controller area network bus, and/or wherein N and T are configurable parameters specific to a vehicle application, and/or wherein the alarm message is used to actuate emergency fire suppression or explosion inerting systems.

4. The impact sensor of any preceding claim, wherein the accelerometer (12) is a triaxial accelerometer, and the threshold circuitry compares an aggregated signal from all three axes of the triaxial accelerometer to an accelerometer reference value selected to exclude low-amplitude shocks.

5. The impact sensor of any preceding claim, wherein the accelerometer is a triaxial accelerometer (12), and the threshold circuitry compares a signal from each axis of the triaxial accelerometer to a corresponding accelerometer reference value selected to exclude low-amplitude shocks.

6. The impact sensor of any of claims 1 to 3, further comprising an amplifier which conditions signals from the analog signal filter (16) with a preselected gain, and supplies the resulting amplified signal to the threshold circuitry (20).

7. A method for detecting high energy shock events with an impact energy sensor (10), the method comprising:
monitoring acceleration along three orthogonal axes using a triaxial accelerometer (12) for sensing accelerations greater than 6000g and for withstanding accelerations greater than 10,000 g;
comparing outputs of the triaxial accelerometer to accelerometer sensitivity references;
generating threshold bits which are non-zero only if the outputs of the triaxial accelerometer exceed the accelerometer sensitivity references;
accumulating the non-zero threshold bits over a time window of width T to assess impact energy;
transmitting an alarm notification if N or more non-zero threshold bits are accumulated within the time window indicating a sufficiently high energy shock event;
identifying faults in the triaxial accelerometer with a built-in test processor; and
wherein the built-in test processor provides a simulated built-in test pattern which is used to verify that appropriate shock events trigger corresponding alarm notifications.

8. The method of claim 7, wherein threshold bits are generated separately for each axis of the triaxial accelerometer, and/or wherein the accelerometer sensitivity references are configurable during maintenance or operation of the impact energy sensor, and are specific to a particular vehicle application, and/or wherein values of T and N are configurable during maintenance or operation of the impact energy sensor, and are specific to a particular vehicle application, and/or further comprising actuating fire suppression or explosion inerting equipment in response to the alarm notification.

9. The method of claim 7, wherein threshold bits are generated based on a comparison of the accelerometer sensitivity references with an aggregation of outputs of all three axes of the triaxial accelerometer.

10. The method of claim 7, wherein the built-in test processor checks bias voltages of the triaxial accelerometer for live voltages, and indicates a fault if any of the bias voltages are not live.

11. The method of claim 7, wherein the built-in test processor suppresses transmission of alarm messages when faults are detected, thereby allowing the triaxial accelerometer to be removed during operation of the impact energy sensor without alarm message transmission.

## Patentansprüche

1. Aufprallenergiesensor (10), umfassend:
einen Beschleunigungsmesser (12), der Beschleunigungen über 6000 g erfasst und Beschleunigungen über 10.000 g widersteht;
einen Analogsignalfilter (16), der dazu konfiguriert ist, Signale von dem Beschleunigungsmesser (12) zu filtern;
eine Schwellenwertschaltung (20), die dazu konfiguriert ist, ein Schwellenwert-Bit ungleich Null nur als Reaktion auf nur diejenigen gefilterten Signale von dem Beschleunigungsmesser (12), die eine bestimmte Empfindlichkeitsschwelle überschreiten, auszugeben; und
einen Datenprozessor (30), der dazu konfiguriert ist, die Schwellenwert-Bits ungleich Null aus der Schwellenwertschaltung über ein vorgegebenes Zeitfenster einer Breite T zu kumulieren, um eine Aufprallenergie abzuschätzen, und dazu konfiguriert ist, eine Warnmeldung nur dann zu übertragen, wenn die kumulierten Schwellenwert-Bits ungleich Null eine vorgegebene Anzahl N innerhalb des Zeitfensters T überschreiten, was auf ein Stoßereignis mit ausreichend hoher Energie hindeutet;
ferner umfassend einen eingebauten Testprozessor (32), der dazu konfiguriert ist, Fehler im Beschleunigungsmesser zu erkennen, wobei der eingebaute Testprozessor dazu konfiguriert ist, simulierte eingebaute Testmuster dem Analogsignalfilter bereitzustellen, um zu bestätigen, dass der Datenprozessor Warnmeldungen als Reaktion auf geeignete Stoßereignisse übermittelt.

2. Aufprallsensor nach Anspruch 1, wobei der eingebaute Testprozessor (32) dazu konfiguriert ist, Vorspannungen an dem Beschleunigungsmesser zu überwachen.

3. Aufprallsensor nach einem der vorstehenden Ansprüche, wobei der Aufprallsensor eine Schnittstellenschaltung (36) umfasst und wobei der Datenprozessor (30) dazu konfiguriert ist, Warnmeldungen über die Schnittstellenschaltung (36) zu melden, die einen Controller-Area-Network-Bus beinhaltet, und/oder wobei N und T konfigurierbare Parameter sind, die für eine Fahrzeuganwendung spezifisch sind, und/oder wobei die Warnmeldung verwendet wird, um Notbrandlöschanlagen oder Explosionsinertisierungssysteme auszulösen.

4. Aufprallsensor nach einem der vorstehenden Ansprüche, wobei der Beschleunigungsmesser (12) ein dreiachsiger Beschleunigungsmesser ist und die Schwellenwertschaltung ein kumuliertes Signal von allen drei Achsen des dreiachsigen Beschleunigungsmessers mit einem Beschleunigungsmesserreferenzwert, der ausgewählt wurde, um Stöße mit niedriger Amplitude auszuschließen, vergleicht.

5. Aufprallsensor nach einem der vorstehenden Ansprüche, wobei der Beschleunigungsmesser ein dreiachsiger Beschleunigungsmesser (12) ist und die Schwellenwertschaltung ein Signal von jeder Achse des dreiachsigen Beschleunigungsmessers mit einem entsprechenden Beschleunigungsmesserreferenzwert, der ausgewählt wurde, um Stöße mit niedriger Amplitude auszuschließen, vergleicht.

6. Aufprallsensor nach einem der Ansprüche 1 bis 3, ferner umfassend einen Verstärker, der Signale von dem Analogsignalfilter (16) mit einem vorausgewählten Verstärkungsfaktor konditioniert und das resultierende verstärkte Signal zur Schwellenwertschaltung (20) liefert.

7. Verfahren zum Erkennen von Hochenergie-Stoßereignissen mit einem Aufprallenergiesensor (10), wobei das Verfahren Folgendes umfasst:
Überwachen der Beschleunigung entlang dreier orthogonaler Achsen unter Verwendung eines dreiachsigen Beschleunigungsmessers (12), der Beschleunigungen über 6000 g erfasst und Beschleunigungen über 10.000 g widersteht;
Vergleichen von Ausgaben des dreiachsigen Beschleunigungsmessers mit Beschleunigungsmesserempfindlichkeitsreferenzen;
Erzeugen von Schwellenwert-Bits, die nicht Null sind, nur wenn die Ausgaben des dreiachsigen Beschleunigungsmessers die Beschleunigungsmesserempfindlichkeitsreferenzen überschreiten;
Kumulieren der Schwellenwert-Bits ungleich Null über ein Zeitfenster der Breite T, um die Aufprallenergie abzuschätzen;
Übermitteln einer Warnbenachrichtigung, wenn N oder mehr Schwellenwert-Bits ungleich Null innerhalb des Zeitfensters kumuliert werden, was auf ein Stoßereignis mit ausreichend hoher Energie hindeutet;
Identifizieren von Fehlern in dem dreiachsigen Beschleunigungsmesser mit einem eingebauten Testprozessor; und
wobei der eingebaute Testprozessor ein simuliertes eingebautes Testmuster bereitstellt, das dazu verwendet wird, zu bestätigen, dass geeignete Stoßereignisse entsprechende Warnbenachrichtigungen auslösen.

8. Verfahren nach Anspruch 7, wobei Schwellenwert-Bits für jede Achse des dreiachsigen Beschleunigungsmessers getrennt erzeugt werden und/oder wobei die Beschleunigungsmesserempfindlichkeitsreferenzen während der Wartung oder des Betriebs des Aufprallenergiesensors konfiguriert werden können und für eine bestimmte Fahrzeuganwendung spezifisch sind und/oder wobei Werte von T und N während der Wartung oder des Betriebs des Aufprallenergiesensors konfiguriert werden können und für eine bestimmte Fahrzeuganwendung spezifisch sind und/oder ferner das Auslösen von Brandlöschanlagen oder Explosionsinertisierungsanlagen als Reaktion auf die Warnbenachrichtigung umfassend.

9. Verfahren nach Anspruch 7, wobei Schwellenwert-Bits basierend auf einem Vergleich der Beschleunigungsmesserempfindlichkeitsreferenzen mit einer Kumulation von Ausgaben aller drei Achsen des dreiachsigen Beschleunigungsmessers erzeugt werden.

10. Verfahren nach Anspruch 7, wobei der eingebaute Testprozessor Vorspannungen des dreiachsigen Beschleunigungsmessers auf aktive Spannungen prüft und einen Fehler angibt, wenn beliebige der Vorspannungen nicht aktiv sind.

11. Verfahren nach Anspruch 7, wobei der eingebaute Testprozessor eine Übertragung von Alarmmeldungen unterdrückt, wenn Fehler entdeckt werden, wodurch es ermöglicht wird, dass der dreiachsige Beschleunigungsmesser während des Betriebs des Aufprallenergiesensors ohne Warnmeldungsübertragung entfernt wird.

## Revendications

1. Capteur d'énergie de choc (10) comprenant :
un accéléromètre (12) permettant de détecter des accélérations supérieures à 6 000 g et permettant de résister à des accélérations supérieures à 10 000 g ;
un filtre de signaux analogiques (16) conçu pour filtrer des signaux provenant de l'accéléromètre (12) ;
un ensemble de circuits de seuil (20) conçu pour émettre un bit de seuil non zéro uniquement en réponse à des signaux filtrés provenant de l'accéléromètre (12) uniquement qui dépassent un seuil de sensibilité spécifié ; et
un processeur de données (30) conçu pour accumuler les bits de seuil non zéro provenant de l'ensemble de circuits de seuil au cours d'une fenêtre temporelle prédéfinie de largeur T pour évaluer une énergie de choc, et conçu pour transmettre un message d'alarme uniquement si les bits de seuil non zéro accumulés dépassent un nombre N prédéfini dans ladite fenêtre temporelle T, indiquant un événement de choc à suffisamment haute énergie ;
comprenant en outre un processeur de test (32) intégré conçu pour détecter des défauts dans l'accéléromètre,
dans lequel le processeur de test intégré est conçu pour fournir des séquences de test intégrées simulées au filtre de signaux analogiques pour vérifier que le processeur de données transmet des messages d'alarme en réponse à des événements de choc appropriés.

2. Capteur de choc selon la revendication 1, dans lequel le processeur de test (32) intégré est conçu pour surveiller des tensions de polarisation sur l'accéléromètre.

3. Capteur de choc selon une quelconque revendication précédente, dans lequel le capteur de choc comprend un ensemble de circuits d'interface (36) et dans lequel le processeur de données (30) est conçu pour rapporter des messages d'alarme via l'ensemble de circuits d'interface (36) incluant un bus controller area network, et/ou dans lequel N et T sont des paramètres configurables spécifiques à une application de véhicule, et/ou dans lequel le message d'alarme est utilisé pour actionner des systèmes d'urgence de lutte contre les incendies ou d'inertie des explosions.

4. Capteur de choc selon une quelconque revendication précédente, dans lequel l'accéléromètre (12) est un accéléromètre triaxial, et l'ensemble de circuits de seuil compare un signal agrégé provenant de tous les trois axes de l'accéléromètre triaxial à une valeur de référence d'accéléromètre sélectionnée pour exclure des chocs de faible amplitude.

5. Capteur de choc selon une quelconque revendication précédente, dans lequel l'accéléromètre est un accéléromètre triaxial (12), et l'ensemble de circuits de seuil compare un signal provenant de chaque axe de l'accéléromètre triaxial à une valeur de référence d'accéléromètre correspondante sélectionnée pour exclure des chocs de faible amplitude.

6. Capteur de choc selon l'une quelconque des revendications 1 à 3, comprenant en outre un amplificateur qui conditionne des signaux provenant du filtre de signaux analogiques (16) avec un gain présélectionné, et fournit le signal amplifié résultant à l'ensemble de circuits de seuil (20).

7. Procédé permettant de détecter des événements de choc à haute énergie avec un capteur d'énergie de choc (10), le procédé comprenant :
la surveillance d'une accélération le long de trois axes orthogonaux en utilisant un accéléromètre triaxial (12) permettant de détecter des accélérations supérieures à 6 000 g et permettant de résister à des accélérations supérieures à 10 000 g ;
la comparaison de sorties de l'accéléromètre triaxial à des références de sensibilité d'accéléromètre ;
la génération de bits de seuil qui sont non zéro uniquement si les sorties de l'accélérateur triaxial dépassent les références de sensibilité d'accéléromètre ;
l'accumulation des bits de seuil non zéro au cours d'une fenêtre temporelle de largeur T pour évaluer une énergie de choc ;
la transmission d'une notification d'alarme si N bits de seuil non zéro ou plus sont accumulés dans la fenêtre temporelle indiquant un événement de choc à suffisamment haute énergie ;
l'identification de défauts dans l'accéléromètre triaxial avec un processeur de test intégré ; et
dans lequel le processeur de test intégré fournit une séquence de test intégrée simulée qui est utilisée pour vérifier que des événements de choc appropriés déclenchent des notifications d'alarme correspondantes.

8. Procédé selon la revendication 7, dans lequel des bits de seuil sont générés séparément pour chaque axe de l'accéléromètre triaxial, et/ou dans lequel les références de sensibilité d'accéléromètre sont configurables pendant une maintenance ou une opération du capteur d'énergie de choc, et sont spécifiques à une application de véhicule particulière, et/ou dans lequel des valeurs de T et N sont configurables pendant une maintenance ou une opération du capteur d'énergie de choc, et sont spécifiques à une application de véhicule particulière, et/ou comprenant en outre l'actionnement d'un équipement de lutte contre les incendies ou d'inertie des explosions en réponse à la notification d'alarme.

9. Procédé selon la revendication 7, dans lequel des bits de seuil sont générés sur la base d'une comparaison des références de sensibilité d'accéléromètre avec une agrégation de sorties de tous les trois axes de l'accélérateur triaxial.

10. Procédé selon la revendication 7, dans lequel le processeur de test intégré vérifie des tensions de polarisation de l'accélérateur triaxial pour trouver des tensions courantes, et indique un défaut si l'une quelconque des tensions de polarisation n'est pas courante.

11. Procédé selon la revendication 7, dans lequel le processeur de test intégré supprime une transmission de messages d'alarme lorsque des défauts sont détectés, permettant ainsi à l'accéléromètre triaxial d'être retiré pendant une opération du capteur d'énergie de choc sans transmission de message d'alarme.
